(19) Europäisches Patentamt

European Patent Office

Office européen des brevets

(11) **EP 1 067 664 A1**

(12) **EUROPEAN PATENT APPLICATION**

(43) Date of publication:
 **10.01.2001 Bulletin 2001/02**

(51) Int. Cl.7: **H02M 3/335**

(21) Application number: **00303376.8**

(22) Date of filing: **20.04.2000**

(84) Designated Contracting States:
 **AT BE CH CY DE DK ES FI FR GB GR IE IT LI LU MC NL PT SE**
 Designated Extension States:
 **AL LT LV MK RO SI**

(30) Priority: **07.07.1999 EP 99460047**

(71) Applicant:
 **TRT Lucent Technologies (SA)**
 **92359 Le Plessis Robinson (FR)**

(72) Inventor: **Libert, Louis**
 **91620 Nozay (FR)**

(74) Representative:
 **Williams, David John et al**
 **Lucent Technologies UK Limited,**
 **5 Mornington Road**
 **Woodford Green, Essex IG8 0TU (GB)**

(54) **Power supply splitter voltage regulator**

(57) The present invention relates to a power supply splitter voltage regulator of the direct converter type. It includes a transformer (T) that is constituted by a primary winding (Le) to the terminals of which is applied a DC input voltage (Ve) and a secondary winding (Ls1), a switch (S) connected in series with said primary winding to split said input voltage (Ve), a main unit (D1, D2, Lp, Cp) that is connected between the terminals of secondary winding (Ls1) to produce a main voltage (Vp) and an auxiliary unit (D3, D4, La, Ca) to produce an auxiliary voltage (Va) that is higher than the main voltage (Vp) and of the same polarity. According to the invention, the auxiliary unit (D3, D4, La, Ca) is connected between the terminals of the secondary winding (Ls1) of the transformer and operates permanently according to a total restitution mode in which, during an open phase of said switch (S), the unit yields all the energy accumulated during the preceding closed phase of said switch (S).

FIG.3

**EP 1 067 664 A1**

**Description**

The present invention relates to a power supply splitter voltage regulator of the direct converter type, intended to produce a DC main voltage and a DC auxiliary voltage with a greater amplitude and the same polarity.

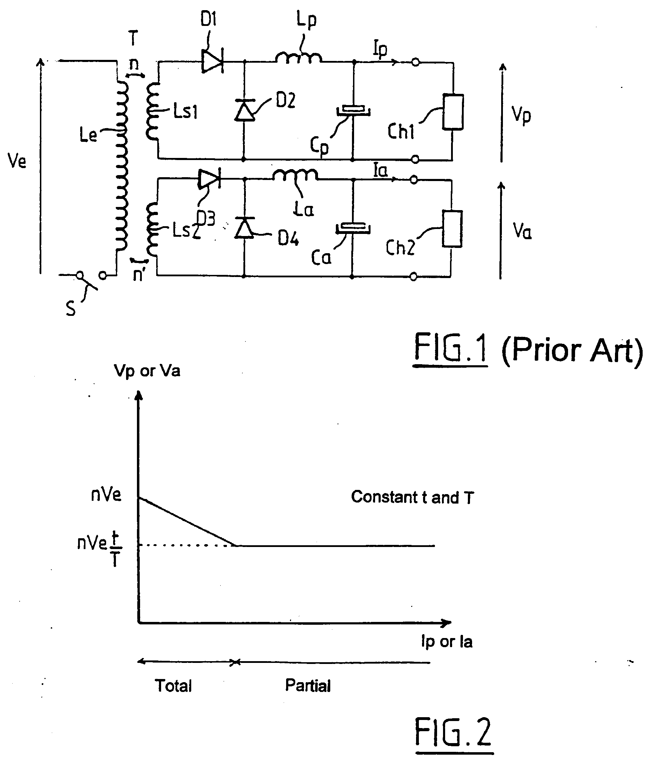

A standard direct or forward converter produces a DC output voltage Vs from a rectified input voltage Ve with a smaller amplitude. It can also be designed to produce a main voltage Vp and an auxiliary voltage Va. The regulator is called a splitter regulator because the input voltage Ve is split over time. This type of converter is shown in figure 1. The input comprises a transformer T that consists of a primary winding Le and two secondary windings Ls1 and Ls2. A switch S is connected in series with the primary winding Le of the transformer to split the input voltage Ve. A main unit is connected to the terminals of the secondary winding Ls1 to produce the main voltage Vp and an auxiliary unit is connected to the terminals of secondary winding Ls2 to produce the auxiliary voltage Va. The relative transformation between the primary winding and the secondary winding Ls1 is referred to as "n" and the relative transformation between the primary winding and the secondary winding Ls2 is referred to as "n'". The main voltage Vp from the main unit is applied to the terminals of a charge Ch1 and the auxiliary voltage is applied to the terminals of a charge Ch2. The main unit comprises a diode D1 and an inductance coil Lp that are connected in series between a first terminal of the secondary winding Ls1 and a first terminal of the charge Ch1. The second terminal of secondary winding Ls1 is connected to the second terminal of the charge Ch1. The anode of diode D1 is connected to the first terminal of secondary winding Ls1 and the cathode is connected to the coil Lp. The unit also comprises a charging capacitor Cp that is assembled in parallel with charge Ch1 and a second diode D2 whose anode is connected to the second terminal of secondary winding Ls1 and the cathode is connected to the cathode of diode D1. The output voltage Vp is obtained at the terminals of capacitor Cp. The structure of the auxiliary unit is identical to that of the main unit. The auxiliary unit comprises two diodes, D3 and D4 respectively, a coil La and a capacitor replaces parts D1, D2, Lp and Cp of the main unit. A charge Ch2 is connected to the output terminals of the auxiliary unit.

This kind of circuit operates as follows: When switch S is closed, a voltage is created at the terminals of the secondary windings Ls1 and Ls2. Given the disposition of diodes D1 and D2 a current Ip is created in the circuit consisting of diode D1, coil Lp and charge Ch1. Coil Lp then stores the power. The term "converter" is used because electric power is transformed into magnetic power. Similarly, a current Ia is created in the circuit consisting of diode D3, coil La and charge Ch2. Also, the power stored in coil Lp flows towards load Ch1 across diode D2 and the power stored in coil La flows into charge Ch2 when switch S is in the open phase. The capacitors Cp and Ca are used to filter the ripple caused by the splitting and act as a power reservoir.

The principal being defined, each unit can operate in one of two modes: either in total restitution mode or partial restitution mode. In the closed phase of the switch, in the total restitution mode, the coil yields all the power stored during the open phase. The output voltage is then equal to:

$$Vp = \frac{n^2 Ve^2 t^2}{2 Lp Ip t + nVe t^2} \text{ for the main unit} \tag{1}$$

$$\text{and } Va = \frac{n^2 Ve^2 t^2}{2 La Ia t + nVe t^2} \text{ for the auxiliary unit} \tag{2}$$

where "t" and "T" respectively refer to the conduction time and the splitting period of switch S;

Ip is the mean value of the output current from the main unit; and
Ia is the mean value of the output current from the auxiliary unit.

In the partial restitution mode the coil only yields part of the power and the output voltage is as follows:

$$Vp = nVe \frac{t}{T} \tag{3}$$

$$\text{and } Va = nVe \frac{t}{T} \tag{4}$$

These two operating modes are shown by the curve Vp or Va = f (Ip or Ia) in figure 2. The curve is plotted for a time t and a constant splitting period T. The unit operates in total restitution mode and Vp (or Va) varies between nVe and nVe $\frac{t}{T}$ for lower values of output current Ip (or Ia) from the unit. The unit operates in partial restitution mode and Vp (or Va) equals nVe $\frac{t}{T}$ for higher Ip (or Ia) values.

In order to produce an auxiliary voltage Va that is higher than main voltage Vp, a secondary winding Ls2 is generally used that has a greater number of turns than secondary winding Ls1 such that the transformation ratio n' is not greater than n.

This double secondary winding transformer is produced from a standard transformer to which a second secondary winding has been wound around the primary winding. The imperfections of this transformer can also be used as a second secondary winding.

This method for producing a double secondary winding transformer does, however, pose a problem when the transformer is produced using integrated technology, such as a CMS technique. It is then impossible to add an additional winding around the primary winding or to use the imperfections of the transformer as an additional winding because the points of access to the transformer stop at the terminals of the primary winding and the secondary winding.

One aim of the invention therefore is to provide a power supply splitter voltage regulator of the direct converter type suitable for producing a DC main voltage Vp and an auxiliary voltage Va that is higher than the main voltage and of the same polarity and that does not comprise an additional secondary winding.

The invention therefore relates to a power supply splitter voltage regulator of the direct converter type comprising a transformer that includes a primary winding of the terminals to which is applied a DC input voltage and a secondary winding, a switch connected in series with said primary winding to split said input voltage, a main unit connected between the terminals of said secondary winding to produce a main voltage and an auxiliary unit to produce an auxiliary voltage that is higher than the main voltage and of the same polarity, characterized in that said auxiliary unit is connected between the terminals of the secondary winding of the transformer, said auxiliary unit operating permanently according to a mode in which, during an open phase of said switch, the unit yields all the power accumulated during the preceding closed phase of said switch.

Other characteristics and advantages of the present invention will be better understood from the following detailed description. The description refers to the attached figures where:

- figure 1, described above, is a wiring diagram of a power supply splitter voltage regulator of the prior art capable of producing a main voltage Vp and an auxiliary voltage Va>Vp and that comprises two secondary windings;
- figure 2, described above, is a Vp or Va = f (Ip or Ia) curve; and
- figure 3 is a wiring diagram of a power supply splitter voltage regulator according to the invention.

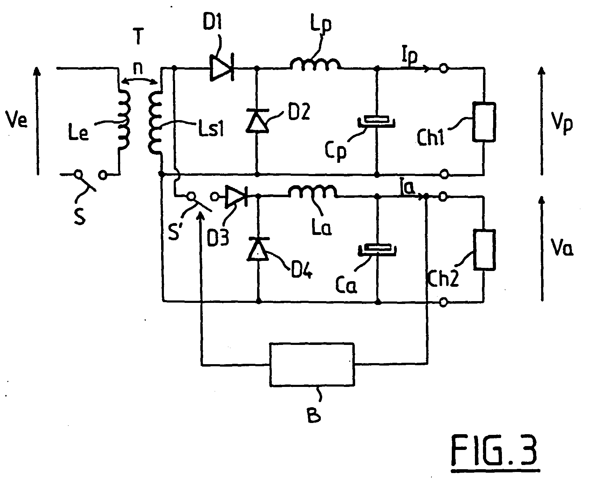

The aim of the invention is to produce an auxiliary voltage Va that is higher than the main voltage Vp from the main unit without adding an additional secondary winding. In order to achieve this, the auxiliary unit is connected to the terminals of secondary winding Ls1 of transformer T and the auxiliary unit is set to function permanently in total restitution mode. A preferred embodiment of the power supply splitter voltage regulator is shown in figure 3.

Both units have the same values of conduction time t and splitting period T of the switch, voltage input Ve and transformation ratio n. Also, a relatively reduced average output current Ia is produced from the auxiliary unit such that the unit operates permanently in total restitution mode.

In order for Va to be always higher than Vp the inductance value $La_{max}$ is calculated when it is obtained from Va = Va $_{min}$ with $Va_{min}$ > Vp. $La_{max}$ is obtained for Ia = Ia $_{max}$ and Ip = Ip $_{min}$. When the auxiliary unit operates in the total restitution mode, $Va_{min}$ is obtained for Ia = Ia $_{max}$. Moreover, when Ip = Ip $_{min}$, the conduction time t of switch S is minimal, thus limiting the magnetization time of the coil La and consequently the auxiliary voltage Va.

Two situations may be occur:

a) the main unit operates in the partial restitution mode
from (3) $t = \frac{Vpt}{nVe}$ can be deduced

therefore, for each value $Va_{min}$ > Vp,

$$Va_{min} = \frac{(nVe)^2 \frac{Vp^2T^2}{(nVe)^2}}{2La_{max}\,Ia_{max}\,T + nVe\left(\frac{VpT}{nVe}\right)^2}$$

is obtained

therefore

$$Va_{min} = \frac{Vp^2 T}{2La_{max} Ia_{max} + nVe \dfrac{Vp^2 T}{nVe}}$$

therefore

$$La_{max} = \frac{Vp^2 T (nVe - Va_{min})}{2n Ia_{max} Va_{min} Ve}$$

(b) the main unit operates in total restitution mode according to (1)

$$Vp_{max} = \frac{(nVet)^2}{2Lp Ip_{min} T + nVet^2}$$

is obtained

according to (2)

$$Va_{min} = \frac{(nVet)^2}{2La_{max} Ia_{max} T + nVet^2}$$

is obtained with $Va_{min} > Vp_{max}$
therefore

$$La_{max} = \frac{2Vp_{max} Ip_{min} LpT - nVet^2 (Va_{min} - Vp_{max})}{2Va_{min} Ia_{max} T}$$

Thus, two maximum inductance values $La_{max}$ are obtained that each operate according to an operating mode of the main unit; therefore, for all $La < La_{max}$ values, $Va > Va_{min} > Vp$ is obtained.

If the main unit operates in both total restitution and partial restitution modes, the value $La_{max}$ to be used is the minimal value of these two values.

The regulator enables an auxiliary voltage Va to be obtained that is higher than voltage Vp. The voltage Va is not necessarily a constant voltage and it is for this reason that an auxiliary switch S' is preferably added to split the voltage from the secondary winding. Therefore, magnetization time t' of inductance coil La is reduced compared to conduction time t of switch s. In figure 3, this switch is positioned between the first terminal of secondary winding Ls 1 and the anode of diode D3, the opening of which is controlled by a control unit B.

**Claims**

1.  Power supply splitter voltage regulator of the direct converter type including a transformer (T) comprising a primary winding (Le) across which a DC input voltage (Ve) is applied and a secondary winding (Ls1), a switch (S) connected in series with said primary winding to split said input voltage (Ve), a main unit (D1,D2,Lp,Cp) connected between the terminals of said secondary winding (Ls1) to produce a main voltage (Vp), and an auxiliary unit (D3,D4,La,Ca) to produce an auxiliary voltage (Va) higher than the main voltage (Vp) and of the same polarity, characterised in that said auxiliary unit (D3,D4,La,Ca) is connected between the terminals of the secondary winding (Ls1) of the transformer, said auxiliary unit (D3,D4,La,Ca) operating permanently according to a total restitution mode, a mode in which, during an open phase of said switch (S), the unit yields all the energy accumulated during the preceding closed phase of said switch (S).

2. A regulator according to Claim 1, characterised in that the auxiliary unit includes a coil (La) whose inductance rating is chosen in such a way that the auxiliary voltage (Va) is higher than the principal voltage.

3. A regulator according to Claim 2, characterised in that the auxiliary unit also includes a switch (S') to maintain the auxiliary voltage (Va) constant.

FIG.1 (Prior Art)

FIG.2

FIG.3

European Patent
Office

**EUROPEAN SEARCH REPORT**

Application Number

EP 00 30 3376

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 41 18 918 A (PHILIPS PATENTVERWALTUNG) 10 December 1992 (1992-12-10) * abstract * * column 2, line 65 - column 4, line 51 * * figure 1 * | 1 | H02M3/335 |
| A | DE 197 11 817 A (ABB DAIMLER BENZ TRANSPORTATION) 24 September 1998 (1998-09-24) * abstract * * column 4, line 44 - column 5, line 22 * * figure 4 * | 1 | |
| A | DE 298 08 082 U (MGV MARGRET GRUBER VERTRIEB GMBH) 9 July 1998 (1998-07-09) * page 5, line 7 - line 35 * * figure 2 * | 1 | |
| A | EP 0 164 144 A (HASLER AG) 11 December 1985 (1985-12-11) * abstract * * figures 3,4 * | 1 | TECHNICAL FIELDS SEARCHED (Int.Cl.7) |
| A | US 5 170 333 A (MASAKI NIWAYAMA) 8 December 1992 (1992-12-08) * abstract * * figures 3,5,7 * * column 1, line 52 - line 63 * * column 6, line 18 - line 35 * | 1 | H02M |

The present search report has been drawn up for all claims

| Place of search | Date of completion of the search | Examiner |
|---|---|---|
| THE HAGUE | 5 October 2000 | Lund, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 1 067 664 A1

## ANNEX TO THE EUROPEAN SEARCH REPORT
## ON EUROPEAN PATENT APPLICATION NO.

EP 00 30 3376

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2000

| Patent document cited in search report | | Publication date | Patent family member(s) | | Publication date |
|---|---|---|---|---|---|
| DE 4118918 | A | 10-12-1992 | NONE | | |
| DE 19711817 | A | 24-09-1998 | WO 0017992 A | | 30-03-2000 |
| DE 29808082 | U | 09-07-1998 | NONE | | |
| EP 164144 | A | 11-12-1985 | DE 3563501 D | | 28-07-1988 |
| US 5170333 | A | 08-12-1992 | JP 4175908 A | | 23-06-1992 |
| | | | DE 4136809 A | | 14-05-1992 |

EPO FORM P0459

For more details about this annex : see Official Journal of the European Patent Office, No. 12/82

9